Europäisches Patentamt

European Patent Office

Office européen des brevets

(19)

(11) Publication number: **0 334 130**
**A1**

## (12) EUROPEAN PATENT APPLICATION

(21) Application number: 89104321.8

(22) Date of filing: 10.03.89

(51) Int. Cl.⁴: **C10M 173/02** , **C10M 109/00** ,
**C08F 242/00** , //(C10M173/02,
159:00),C10N40:24

(30) Priority: 23.03.88 JP 68928/88

(43) Date of publication of application:
27.09.89 Bulletin 89/39

(84) Designated Contracting States:
DE ES FR

(71) Applicant: Kao Corporation
14-10, Nihonbashi Kayabacho 1-chome
Chuo-Ku Tokyo 103(JP)

(72) Inventor: Mamba, Akio
140-43, Enokihara
Wakayama-shi Wakayama(JP)
Inventor: Nakanishi, Akira
1450, Nishihama
Wakayama-shi Wakayama(JP)
Inventor: Suzue, Shigetoshi
997-5, Narukami
Wakayama-shi Wakayama(JP)
Inventor: Kimura, Akio
727-103, Zenmyoji
Wakayama-shi Wakayama(JP)

(74) Representative: Patentanwälte Dr. Solf & Zapf
Zeppelinstrasse 53
D-8000 München 80(DE)

(54) **Plastic working oil for metal.**

(57) A lubricant composition to use for plastic working of a metal piece, comprises a modified ester compound, obtained by polymerizing an ester compound having a kinetic viscosity of 10 to 500 cSt at 40 degree C and having at least two ester linkages and at least 30 carbon atoms or reacting the ester compound with an olefin to effect an addition reaction, said modified ester compound having a kinetic viscosity at 40 degree C of a value which is 1.2 to 20 times as high as that of the starting ester compound.

## Plastic Working Oil for Metal

The present invention relates to a novel plastic working oil for metal.

[Prior Art]

A plastic working oil for metal commonly used in the art comprises a lubricating oil component, such as fats and oils, fatty acid ester, or mineral oil, mixed with a lubrication aid, such as oiliness improver, extreme-pressure agent, rust preventive, or antioxidant, and is supplied to the part of metal working after dilution with water with the aid of a suitable emulsifier or without dilution with water.

For example, in cold rolling of steel, the above-described working oil is diluted with water and supplied to an inlet zone of roll bites for the purpose of decreasing the friction between the rolls and a workpiece.

However, with rapid progress of rolling techniques in recent years, attempts have been made on high-speed rolling, reduction in the number of rolling passes, increase in the standard level of rolled products, etc., thus leading to ever-increasing severe requirements for lubricating conditions of the rolling mill oil.

Under these circumstances, the occurrence of friction pickup caused by seizure between rolling rolls and a steel sheet during rolling must be strictly avoided. For this reason, there has been a strong desire in the art for the development of a rolling mill oil capable of satisfying the above-described requirements.

However, no conventional metal plastic working oil compositions satisfied the above-described performance requirements. Specifically, in rolling under high speed and high pressure conditions, the rolling mill oil components are exposed to a high temperature and a high pressure in the rolling rolls and the drawn part of a steel sheet as a material due to the occurrence of the heat of friction between the rolling rolls and the steel sheet and the heat of plastic working and an increase in the average deformation resistance accompanying an increase in the rate of distortion. Since the conventional lubricant components cannot form a strong boundary lubrication film under the above-described severe conditions, there occurred breaking of the oil film, which brought about the occurrence of seizure between the rolls and the material.

Under these circumstances, an object of the present invention is to provide a plastic working oil for metal which is superior to the conventional plastic working oils and brings about no breaking of the oil film even under the above-described severe lubricating conditions.

[ Summary of the Invention ]

The present inventors have made extensive and intensive studies with a view to developing an ester-base working oil which can lower heat of friction between the rolls and the material by virtue of excellent lubricity, form a strong lubricant film even under severe conditions, and prevent the seizure between the rolls and the material and, as a result, have found that the object of the present invention can be attained by incorporating, as an indispensable ingredient, a compound prepared by polymerizing a compound having at least two ester linkages or subjecting the compound to an addition reaction with an olefin, which has led to the completion of the present invention.

Accordingly, the present invention provides a plastic working oil for metal, characterized by comprising, as an indispensable ingredient, a compound prepared by polymerizing an ester compound having a kinetic viscosity (as determined according to JIS; JIS 2283-1956, JIS Z 8803-1959) of 10 to 500 cSt at 40°C and having at least two ester linkages and at least 30 carbon atoms so as to give a polymer having a kinetic viscosity at 40°C which is 1.2 to 20 times higher than that of said ester compound before polymerization or subjecting said ester compound to an addition reaction with an olefin.

The invention provides, in other words, a lubricant composition to use for plastic working of a metal piece, which comprises a modified ester compound, obtained by polymerizing an ester compound having a kinetic viscosity of 10 to 500 cSt at 40 degree C and having at least two ester linkages and at least 30 carbon atoms or reacting the ester compound with an olefin to effect an addition reaction, said modified ester compound having a kinetic viscosity at 40 degree C of a value which is 1.2 to 20 times as high as that of the starting ester compound, and a carrier liquid such as water.

It is practical that it is an emulsion comprising 0.5 to 20 weight percent of the modified ester compound and the balance of water.

Another conventional lubricant may be used in combination with the lubricant of the invention.

The invention further provides a method for plastically working a metal piece with use of the modified

2

ester compound as defined above.

It is preferred that the starting ester compound has 2 to 6 ester groups and 30 to 100 carbon atoms.

The present invention will now be described in more detail. The modified ester compound constituting the novel plastic working oil of the present invention is one prepared by utilizing known reactions. For example, the modified ester compound may be prepared by polymerizing a fatty acid ester or subjecting a fatty acid ester to an addition reaction with an olefin in the presence of an initiator, as described in J.A.O.C.S., 30, 53 (1953), J. Chem. Soc., 1918 (1965), etc.

The ester to be modified according to the present invention has at least two ester groups per molecule, and examples thereof include dibasic acid diesters such as dioleyl adipate and dioctyl phthalate, dihydric alcohol diesters such as neopenthyl glycol dioleate and ethylene glycol dioleate, and polyhydric alcohol esters such as trimethylolpropane tricaprate, glycerine trioleate, pentaerythritol tetraoleate, coconut oil, beef tallow, and castor oil, and polybasic acid esters such as triisostearyl trimellitate. However, the ester is not limited to these only.

The term "olefin" used in the present invention is intended to mean an olefin having at least one ethylenic linkage and include not only monoolefins but also diolefins. Although there is no particular limitation with respect to the olefin, the olefin is preferably an $\alpha$-olefin or $\alpha,\omega$-diene having 30 or lower carbon atoms, particularly 4 to 30 carbon atoms, more preferably 8 to 20 carbon atoms.

When the ester compound is polymerized or subjected to an addition reaction with an $\alpha$-olefin or $\alpha,\omega$-diene, it is possible to use radical generators, e.g., organic peroxides, inorganic peroxides, azo compounds, light, or radiations. In particular, it is preferred to use an organic peroxide as the initiator. Preferable examples of the organic peroxide include dialkyl peroxides, hydroperoxides, diacyl peroxides, peroxy esters, dioxydicarbonates, and peroxy ketals. Specific examples of the organic peroxide include di-tert-butyl peroxide, dicumyl peroxide, and tert-butyl hydroperoxide, though the organic peroxide is not limited to these only.

The ester compound is polymerized under the following reaction conditions. In general, the radical generator as an initiator is added to the ester compound heated at 50 to 250°C in the absence of any solvent or after dilution with a solvent. Alternatively, the ester compound is preliminarily mixed with the initiator, and the temperature of the mixture is gradually raised. The radical generator is used for the polymerization in an amount of preferably 0.01 to 5 equivalents, particularly preferably 0.10 to 0.50 equivalent per equivalent of the ester group.

On the other hand, the addition of the olefin is generally conducted by a method wherein the olefin and the radical generator are added to the ester compound heated at 50 to 250°C; a method wherein the radical generator is added to a mixture of the ester compound with the olefin; or a method wherein the olefin is added to a mixture of the ester compound with the radical generator. The olefin is used in an amount of preferably 2 or less equivalents, particularly preferably 1 or less equivalent per equivalent of the ester group. The amount of the radical generator used for the addition of the olefin is 0.01 to 5 mol, particularly preferably 0.05 to 2.00 mol per mol of the olefin.

The modified ester compound according to the present invention has a kinetic viscosity at 40°C which is 1.2 to 20 times, preferably, 1.5 to 15 times higher than that of the ester compound before modification. When the kinetic viscosity is less than 1.5 times as high, no significant modification effect can be attained, while when it exceeds 20 times as high, the modified ester compound is excessively viscous.

The modified ester which is an indispensable ingredient constituting the present invention may be used alone or after dilution with a conventional lubricating oil component comprising at least one member selected from fats and oils, fatty acid esters, and mineral oils. In this case, the content of the modified ester is preferably at least 10% by weight, particularly preferably at least 30% by weight.

If necessary, the plastic working oil of the present invention may be used in combination with conventional additives such as oiliness improvers, extreme-pressure additives, antioxidants, rust preventives, antiseptic agents, emulsifiers, and dispersants.

The product of the present invention can be used in the same manner as that of the conventional products. When the product is diluted with water, it may be used in the form of an O/W type emulsion having a product content of 0.5 to 20% by weight.

[Examples]

The present invention will now be described in more detail with reference to the following Examples which should not be construed as limiting the scope of the present invention.

[Examples]

Synthesis Example 1

420.0 g (0.5 mol) of refined beef tallow was placed in a 1-ℓ four-necked flask equipped with a stirring rod, a nitrogen inlet tube, a thermometer, a dropper, and a separator with a cooling pipe, and heated at 190°C in a nitrogen atmosphere. 21.9 g (0.15 mol) of di-tert-butyl peroxide (hereinafter abbreviated to "DTBPO") as a reaction initiator was a dropwise added thereto over a period of 2 hr. The reaction was allowed to proceed while removing a low-boiling compound produced as a by-product during dropping of the initiator outside the system. After the completion of the reaction, the low-boiling compound was completely removed at 190°C under a pressure of 10 to 30 mmHg to prepare 418.6 g of compound A.

Synthesis Example 2

420.0 g (0.5 mol) of refined beef tallow was placed in a 1-ℓ four-necked flask equipped with a stirring rod, a nitrogen inlet tube, a thermometer, a dropper, and a separator with a cooling pipe, and heated at 190°C in a nitrogen atmosphere. A mixed solution comprising 14.6 g (0.10 mol) of DTBPO and 41.5 g (0.25 mol) of diallyl phthalate was dropwise added thereto as a reaction initiator over a period of 2 hr. The reaction was allowed to proceed while removing a low-boiling compound produced as a by-product during dropping of the initiator outside the system. After the completion of the reaction, the resulting reaction mixture was aged for 30 min, and an unreacted olefin was completely removed at 190°C under a pressure of 10 to 30 mmHg to prepare 501.8 g of compound C.

Synthesis Example 3

420.0 g (0.5 mol) of refined beef tallow was placed in a 1-ℓ four-necked flask equipped with a stirring rod, a nitrogen inlet tube, a thermometer, a dropper, and a separator with a cooling pipe, and heated at 190°C in a nitrogen atmosphere. A mixed solution comprising 21.9 g (0.15 mol) of DTBPO and 83.0 g (0.5 mol) of 1-dodecene was dropwise added thereto as a reaction initiator over a period of 2 hr. The reaction was allowed to proceed while removing a low-boiling compound produced as a by-product during dropping of the initiator outside the system. After the completion of the reaction, the resulting reaction mixture was aged for 30 min, and an unreacted olefin was completely removed at 190°C under a pressure of 10 to 30 mmHg to prepare 511.8 g of compound D.

Synthesis Example 4

357.6 g (0.6 mol) of refined beef tallow was placed in a 1-ℓ four-necked flask equipped with a stirring rod, a nitrogen inlet tube, a thermometer, a dropper, and a separator with a cooling pipe, and heated at 190°C in a nitrogen atmosphere. A mixed solution comprising 8.8 g (0.06 mol) of DTBPO and 99.6 g (0.6 mol) of 1-dodecene was dropwise added thereto as a reaction initiator over a period of 2 hr. The reaction was allowed to proceed while removing a low-boiling compound produced as a by-product during dropping of the initiator outside the system. After the completion of the reaction, the resulting reaction mixture was aged for 30 min, and an unreacted olefin was completely removed at 190°C under a pressure of 10 to 30 mmHg to prepare 419.4 g of compound I.

A similar reaction was conducted under respective conditions to prepare compounds A to K shown in Table 1.

4

Table 1

| Cpd. No. | synthesis conditions* (mol ratio) ester | initiator | olefin | MW (VPO) | kinetic viscosity 40°C (cst) | pour point °C |
|---|---|---|---|---|---|---|
| A | refined beef tallow 1 | DTBPO 0.3 | — | 1150 | 143 | 31 |
| B | refined beef tallow 1 | DTBPO 0.5 | — | 1510 | 402 | 37 |
| C | refined beef tallow 1 | DTBPO 0.2 | diallyl phthalate 0.5 | 1240 | 103 | 25 |
| D | refined beef tallow 1 | DTBPO 0.3 | 1-dodecene 1 | 1080 | 84 | 24 |
| E | refined coconut oil 1 | DTBPO 0.3 | — | 870 | 79 | 21 |
| F | refined coconut oil 1 | DTBPO 0.5 | — | 890 | 107 | 19 |
| G | refined coconut oil 1 | DTBPO 1.0 | — | 1210 | 451 | 13 |
| H | TMP tricaprate 1 | DTBPO 0.5 | — | 807 | 65.8 | -14 |
| I | TMP tricaprate 1 | DTBPO 0.1 | 1-dodecene 1 | 690 | 39.9 | -16 |
| J | TMP tricaprate 1 | DTBPO 0.3 | diallyl phthalate 0.5 | 930 | 96.8 | -30 |
| K | NPG dioleate 1 | DTBPO 0.8 | 1-dodecene 1 | 830 | 90.9 | <-40 |

Note: *DTBPO: di-tert-butyl peroxide    TMP: trimethylolpropane

NPG: neopentyl glycol

Viscosity of starting ester:
refined beef tallow 45.7 cSt
refined coconut oil 27.5 cSt
TMP tricaprate 19.5 cSt
TMP trioleate 48.0 cSt
NPG dioleate 24.7 cSt

Examples 1 to 11 and Comparative Example

A compound shown in Table 1 was mixed with refined beef tallow and an emulsifier, and a rolling mill oil was prepared from the mixture by the following method. The rolling mill oil was subjected to determination of a rolling load (ton) at a draft of 50% in the rolling test and a pressure load (kg/cm²) at 750 rpm in the Soda four-ball friction test. The results are shown in Table 2.

Method of preparing rolling mill oil:

A rolling mill oil shown in Table 2 was poured into water kept at a temperature of 55°C and stirred with a homomixer to prepare an emulsion having an oil content of 3% by weight. This emulsion was supplied through a pump to a lubricating part of each of a Soda four-ball friction tester and a rolling machine.

Pressure-proof load test:

A Soda four-ball friction tester was used.
The pressure-proof load at 750 rpm was measured according to JIS K 2519.

Rolling test:

Rolling machine:

| | |
|---|---|
| work roll diameter | 200 mmø |
| barrel length | 200 mm |
| roll material | SUJ-2 |
| roll hardness | Hs95 |
| roll roughness | Ra = 0.33 |
| peripheral speed of roll | 100 m/min |

Rolling material:

SPCC-D
1.0 mm in thickness x 50 mm in width x 300 mm in length

Method of determining rolling performance:

Rolling was conducted between two points at a draft of about 50%, and the rolling load applied at that time was measured with a load cell. The rolling load at a draft of 50% was read from a graph of the rolling load against the draft.

## Table 2

| Ex. No. | composition | pts. wt. | rolling load in rolling test (ton) | pressure-proof load in Soda four-ball friction test $(kg/cm^2)$ |
|---|---|---|---|---|
| 1 | compound A<br>refined beef tallow<br>emulsifier | 30<br>65<br>5 | 23.9 | 5.0 |
| 2 | compound B<br>refined beef tallow<br>emulsifier | 30<br>65<br>5 | 23.1 | 5.5 |
| 3 | compound C<br>refined beef tallow<br>emulsifier | 30<br>65<br>5 | 22.8 | 5.5 |
| 4 | compound D<br>refined beef tallow<br>emulsifier | 30<br>65<br>5 | 23.5 | 5.5 |
| 5 | compound E<br>refined beef tallow<br>emulsifier | 30<br>65<br>5 | 24.0 | 5.0 |
| 6 | compound F<br>refined beef tallow<br>emulsifier | 30<br>65<br>5 | 23.2 | 5.0 |
| 7 | compound G<br>refined beef tallow<br>emulsifier | 30<br>65<br>5 | 23.4 | 5.0 |
| 8 | compound H<br>refined beef tallow<br>emulsifier | 30<br>65<br>5 | 24.2 | 5.0 |
| 9 | compound I<br>refined beef tallow<br>emulsifier | 30<br>65<br>5 | 24.9 | 4.5 |
| 10 | compound J<br>refined beef tallow<br>emulsifier | 30<br>65<br>5 | 23.0 | 5.0 |

EP 0 334 130 A1

Table 2 (cont'd)

| Ex. No. | composition | pts. wt. | rolling load in rolling test (ton) | pressure-proof load in Soda four-ball friction test (kg/cm$^2$) |
|---|---|---|---|---|
| 11 | compound K<br>refined beef tallow<br>emulsifier | 30<br>65<br>5 | 23.2 | 5.0 |
| Comp. Ex. | refined beef tallow<br>phosphate extreme-<br>pressure agent<br>emulsifier | 93<br>2<br>5 | 27.6 | 4.0 |

Note:  emulsifier:  polyoxyethylene nonylphenyl ether

(number of EO molecules added = 5)

## Claims

1. A lubricant composition to use for plastic working of a metal piece, which comprises a modified ester compound, obtained by polymerizing an ester compound having a kinetic viscosity of 10 to 500 cSt at 40 degree C and having at least two ester linkages and at least 30 carbon atoms or reacting the ester compound with an olefin to effect an addition reaction, said modified ester compound having a kinetic viscosity at 40 degree C of a value which is 1.2 to 20 times as high as that of the starting ester compound, and a carrier liquid.

2. A composition as claimed in Claim 1, in which the carrier liquid is water.

3. A composition as claimed in Claim 1, which is an emulsion comprising 0.5 to 20 weight percent of the modified ester compound and the balance of water.

4. A composition as claimed in Claim 1, which further comprises another lubricant.

5. A method for plastically working a metal piece with use of the modified ester compound as defined in Claim 1.

8

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | PATENT ABSTRACTS OF JAPAN, vol. 11, no. 332 (C-455)[2779], 29th October 1987; & JP-A-62 115 092 (MIYOSHI OIL & FAT CO., LTD) 26-05-1987 * Abstract * --- | 1,5 | C 10 M 173/02 C 10 M 109/00 C 08 F 242/00 // (C 10 M 173/02 C 10 M 159:00 ) C 10 N 40:24 |
| X | DE-A-1 152 215 (TORE PER GUSTAV STEDT) * Claims 1,5,6 * --- | 1,4,5 | |
| A | GB-A-2 134 923 (OY KASVIOLJY-VAXTOLJE AB) * Claims 1-7 * --- | 1,4 | |
| A | PATENT ABSTRACTS OF JAPAN, vol. 8, no. 122 (C-227)[1559], 8th June 1984; & JP-A-59 33 395 (KAWASAKI SEITETSU K.K.) 23-02-1984 --- | 1-5 | |
| A | US-A-2 837 547 (C.J. ISH) * Column 1, lines 15-24 * ----- | 1 | |

RECHERCHIERTE SACHGEBIETE (Int. Cl.4)

C 10 M
C 08 F
C 10 N 40/24

Der vorliegende Recherchenbericht wurde für alle Patentansprüche erstellt

| Recherchenort | Abschlußdatum der Recherche | Prüfer |
|---|---|---|
| DEN HAAG | 12-05-1989 | ROTSAERT L.D.C. |